Europäisches Patentamt

European Patent Office

Office européen des brevets

(11) Veröffentlichungsnummer: **0 265 838 B1**

# EUROPÄISCHE PATENTSCHRIFT

(45) Veröffentlichungstag der Patentschrift: **16.12.92**

(21) Anmeldenummer: **87115473.8**

(22) Anmeldetag: **22.10.87**

(51) Int. Cl.⁵: **G06K 19/08**, G06K 7/12, G06K 7/14

(54) **Fälschungssicheres Code-Kartenlesersystem.**

(30) Priorität: **30.10.86 DE 3636921**

(43) Veröffentlichungstag der Anmeldung:
**04.05.88 Patentblatt 88/18**

(45) Bekanntmachung des Hinweises auf die
Patenterteilung:
**16.12.92 Patentblatt 92/51**

(84) Benannte Vertragsstaaten:
**AT BE CH DE ES FR GB GR IT LI LU NL SE**

(56) Entgegenhaltungen:
FR-A- 2 192 738
US-A- 3 919 447

(73) Patentinhaber: **Interflex Datensysteme GmbH
Zettachring 16
W-7000 Stuttgart 80(DE)**

(72) Erfinder: **Vogt, Werner
Lindenweg 3
CH-5453 Remetschwil(CH)**
Erfinder: **Schuhwerk, Anton
Scheibenbuckstrasse 18
CH-7716 Geisingen 5(DE)**

(74) Vertreter: **Otte, Peter, Dipl.-Ing.
Tiroler Strasse 15
W-7250 Leonberg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Stand der Technik

Die Erfindung betrifft ein fälschungssicheres Code-Kartenlesersystem nach dem Oberbegriff des Anspruchs 1.

Bei den bekannten optoelektrischen Code-Kartenlesern (DE-PS 27 47 076; DE-PS 28 43 462), die ein bevorzugtes Anwendungsgebiet vorliegender Erfindung betreffen, sind in der zugeordneten Codekarte nicht sichtbare und/oder halbdurchlässige bzw. schwach durchlässige Lesespuren angeordnet, die von speziellen Leseköpfen, jeweils bestehend aus einer vorzugsweise impulsgetriebenen Fotodiode als Lichtquelle und einem Fototransistor als Empfänger bei relativ zu diesen bewegter Karte ausgelesen wird. Bevorzugt wird hierbei mit Infrarotlicht gearbeitet, schon allein zur Erhöhung der Fälschungssicherheit, so daß solche Codekarten insbesondere als Kreditkarten, Scheckkarten, Personenidentifikationskarten u. dgl. weit verbreitet sind. Dabei sind alle bisher zum Lesen solcher Codekarten bekannten optoelektrischen Code-Kartenleser so ausgelegt, daß sie die Lesespuren und gegebenenfalls Taktspuren auf der Codekarte, wenn vorhanden, bei relativ zu den Leseköpfen bewegter Karte oder bei stillstehender Karte abtasten, die so gewonnenen Dateninformationen, die meistens seriell, gegebenenfalls aber auch in parallelen Bit-Paketen seriell angeboten werden, auswerten und dann beispielsweise entweder einen Zugang zu einem Gebäude freigeben, eine bestimmte Tätigkeit veranlassen, etwa Auszahlung bestimmter Geldbeträge, oder jedenfalls ganz allgemein erlaubte Manipulationen vom Träger der Karte nicht behindern.

Ein besonderes Problem bei solchen Code-, Ausweis- oder Kreditkarten, auch solchen, bei denen die Auslesung nicht auf optischen Mitteln beruht, also etwa Kreditkarten mit Magnetstreifen und gegebenenfalls Beschriftung im Klartext, ist deren Fälschungssicherheit, da natürlich sichergestellt werden muß, daß mit solchen Codekarten kein Mißbrauch getrieben werden kann.

Es ist in diesem Zusammenhang zwar bekannt, bei bestimmten Karten, beispielsweise Kreditkarten, auf der Rückseite eine Magnetspur anzulegen, die bestimmte Dateninformationen enthält; hierbei könnte aber problematisch sein, daß die in diesem Fall alleinige Magnetspur verlorengehen kann, wenn sie mit starken statischen Magnetquellen in Berührung kommt, oder sie kann auch durch entsprechende Meßinstrumente erfaßt werden, wenn die Karte nur zeitweilig in fremde Hände gerät.

Bei einer anderen bekannten Vorrichtung (DE-OS 25 59 430) wird zur Prüfung von solchen Ausweisdokumenten so vorgegangen, daß im Lesebetrieb mindestens eine Fotodiode bei eingeschalteten Lichtquellen auch in einer Art Impulsbetrieb arbeitet, der deshalb zur Funktionssicherheit erforderlich ist, weil durch diesen Impulsbetrieb ein zusätzliches Phänomen als Erkennungshilfe ausgenutzt werden kann. Dies besteht darin, daß die Codekarte selbst besondere Prüfstoffe aus Verbindungen Seltener Erden enthält, die die Eigenschaften haben, impulsweise einfallendes Licht mit bestimmten Verzögerungen zu reflektieren bzw. durchzulassen. Mit Hilfe eines zeitlich abgestimmten Impulsoszillators können diese zeitlichen Verzögerungen als zusätzliches Identifikationsmerkmal ausgenutzt werden. Dabei muß allerdings das Lesen der Codekarte im Stillstand erfolgen, d. h. statisch. Würde man nämlich bei dem dort angewendeten Leseprinzip das Lesen wie allgemein üblich dynamisch durchführen, d. h. mit bewegter Karte, dann müßte diese Karte mit präziser Vorschubgeschwindigkeit durch den Karteneinzugkanal transportiert werden, weil sonst eine Abstimmung auf die prüfstoffspezifische zeitliche Verzögerung der zu lesenden Lichtimpulse nicht möglich wäre. Andererseits ist aber bei statischem Lesebetrieb eine präzise Positionierung der Codekarte im Leseschacht erforderlich, was nicht nur bezüglich der Führungselemente in diesem, sondern auch bezüglich der Abmessungen der Karte eine hohe Fertigungsgenauigkeit erforderlich macht. Dies bedingt ferner, daß die Karte von äußeren mechanischen Verformungen und Beschädigungen freigehalten werden muß bzw. daß beschädigte Karten nicht mehr verwendbar sind.

Dieses bekannte Prüfprinzip ist kompliziert, erfordert den umständlichen Einbau von bestimmten Verbindungen in die Karte und erfordert auch äußere, wiederholbare Lesebedingungen, die mit entsprechender Genauigkeit ablaufen müssen. Ferner ist es bei diesem bekannten Prüfprinzip erforderlich, daß die Karte an der Stelle, wo der sogenannte Prüfstoff angeordnet ist, klarsichtig durchscheinend ist, daß nur Licht einer bestimmten Wellenlänge verwendet wird, was alternde Fotodioden nicht immer garantieren, und daß zumindest die Stelle, an der der Prüfstoff angeordnet ist, immer schmutzfrei gehalten wird, weil sonst Lesefehler unvermeidbar sind.

Zur Vermeidung von Fälschungen bei solchen Karten ist es ferner bekannt (US-A-3 919 447), die Karte aus einer ersten Schicht eines Polyvinylchlorids mit einem Durchlaß-Bandpaßverhalten im Infrarotbereich herzustellen und dann auf diese erste Schicht eine zweite Schicht zu laminieren, die entweder selektiv Öffnungen aufweist, oder diese zweite Schicht so auszulegen, daß sie diskrete Bereiche aufweist, die auf ausgewählte Bereiche der ersten Schicht aufliegen. Dabei ist diese zweite Schicht bei einer einzigen Frequenz innerhalb des Durchlaß-Bandpasses der ersten Schicht opak, also undurchlässig. Wird eine solche Karte als Laminat mit Infrarotlicht beleuchtet, dann ist eine Spektraldifferenz lediglich bei etwa 5,8 μ feststellbar, wenn die zweite Schicht beispielsweise Karbonylgruppen enthält.

Bei einem weiteren bekannten System zur Vermeidung von Fälschungen bei Karten (FR-A-2 192 738) wird so vorgegangen, daß ebenfalls mehrere Materialschichten für die Karte verwendet werden, die Absorptionsbänder im Bereich von ersten und zweiten Grenzwerten aufweisen, wobei das Maximum der Emission von Sendeelementen und das Empfindlichkeitsmaximum von auf Lichteinwirkung reagierenden Fotoelementen im Bereich des Lesers sich zwischen dem ersten und dem zweiten Grenzwert befinden.

Der Erfindung liegt die Aufgabe zugrunde, bei einem Code-Kartenlesesystem nach Anspruch 1 mit zugeordneten Code- oder Kreditkarten eine hohe Fälschungssicherheit ohne größeren Aufwand sicherzustellen, und zwar dadurch, daß spezielle, auf die Lichtdurchlässigkeit gerichtete Eigenschaften der Codekarte mit speziellen, darauf abgestimmten Sensoren im Bereich des Lesers erfaßt und so die Zulässigkeit der Karte überhaupt überprüft wird.

Vorteile der Erfindung

Die Erfindung löst diese Aufgabe mit den kennzeichnenden Merkmalen des Hauptanspruchs und hat den Vorteil, daß eine Negativeigenschaft in der Lichtdurchlässigkeit der Codekarte, und zwar bevorzugt ein sogenanntes Infrarot-Negativfenster, welches im Grunde in an sich beliebiger geometrischer Verteilung, als Maske o.dgl. grundsätzlich über das ganze Kartenformat gelegt sein kann, vorzugsweise aber im Bereich der auszulesenden Daten- und Taktspuren angeordnet ist, abgestimmt ist auf bestimmte Positionen und Eigenschaften mindestens eines zusätzlichen Lichtempfängers im Bereich des Code-Kartenlesers derart, daß am Ausgang dieses zusätzlichen Lichtempfängers das sich beim Auftreffen auf ein solches Negativfenster ergebende Null-Signal als Merkmal für den Gut-Zustand oder die Korrektheit der Codekarte identifizieren läßt. Die Erfindung eignet sich insbesondere auch für Kreditkarten, Scheckkarten und dergl., da durch das selektive optische Fenster schnell überprüft werden kann, ob eine Fälschung vorliegt.

Diese beiden aufeinander abgestimmten Eigenschaften von Codekarte bzw. Codeleser können dann in beliebiger Weise mit der Intelligenz der Auswerteschaltung kombiniert werden, etwa dahingehend, daß bei bestimmten auftretenden Daten- oder Taktsignalen der mindestens eine zusätzliche Lichtempfänger Null-Signal "sehen" muß oder bei entsprechender geometrischer Verteilung von mehreren solcher zusätzlicher Lichtempfänger diese in einer bestimmten Abfolge beim Einziehen oder Einschieben der Karte oder allgemein bei deren Auslesen auftreten müssen, in entsprechenden seriellen oder parallelen Bit-Worten. Geht man in diesem Zusammenhang zum besseren Verständnis auf ein spezielles bevorzugtes Ausführungsbeispiel ein, dann kann der Codekarte beispielsweise im Bereich auszulesender Takt- oder Datenspuren eine bestimmte zusätzliche Folie zugeordnet sein, die IR-Licht innerhalb eines bestimmten, vorzugsweise schmaleren Wellenlängenbereichs praktisch vollständig unterdrückt, für diesen Bereich also, aber nur für diesen Bereich opak, d.h. nichttransparent ist. Es ergibt sich daher etwa im Bereich einer Datenspur und beispielsweise durchlaufend für diese Datenspur ein Infrarot-Negativfenster eines bestimmten Wellenlängenbereichs und zusätzlich zu dem normalen IR-Lichtempfänger, beispielsweise Fototransistor, der diese Datenspur abtastet, ist, entweder in enger Nachbarschaft zu diesem oder in an sich beliebiger anderer Position, jedoch jedenfalls ausgerichtet auf diese Datenspur, der zusätzliche Lichtempfänger als weiterer Fototransistor vorgesehen, der aber so ausgebildet ist, daß er ausschließlich auf Licht in den IR-Wellenlängenbereich anspricht, welches von der zusätzlichen Folie unterdrückt wird. Es versteht sich, daß hier anstelle einer Folie auch beliebige andere Ausbildungen der transparenten Bereiche der Codekarte getroffen werden können, damit sich die negative Selektivität bezüglich des erwähnten Wellenlängenbereichs ergibt.

Die Grundfunktion beim Auslesen der Karte ist dann so, daß immer dann, wenn der normale Daten- oder Taktspurlesekopf durch die Codierung ein Signal empfängt und dieses weiterleitet, der zusätzliche Lichtempfänger kein Signal abgeben kann, weil in dem Wellenlängenbereich, in dem er exclusiv "sehen" kann, die Folie das IR-Licht unterdrückt. Es ergibt sich daher am Ausgang dieses zusätzlichen Fotosensors, wenn man es allgemein ausdrücken will, ein Null-Signal immer dann, wenn der die Datenspur auslesende normale Lichtsensor L-Signal aufweist (die Signale können auch mit logisch Null = log 0 bzw. logisch Eins = log 1 bezeichnet werden).

Dieses Grundprinzip ist in extrem hohem Maße schon fälschungssicher, weil der Versuch, Schwärzungen auf der Code-Karte vorzunehmen, damit der zusätzliche, also hier spezielle Lichtsensor nichts sieht und daher log 0-Signal abgibt, deshalb fehlgehen muß, weil durch diese Schwärzungen, da eben gerade im Bereich einer Daten- oder Taktspur gearbeitet wird, natürlich auch diese abdecken und dann der normale Lichtsensor auch nichts mehr sieht. Unter diesen Umständen wird die Karte sofort zurückgewiesen.

Dem Versuch, etwa durch Manipulationen am Leser selbst zu fälschen, was unter Umständen nicht ausgeschlossen werden könnte, wenn dieser zugänglich ist, beispielsweise dahingehend, daß man den zusätzlichen Lichtsensor einfach schwärzt oder abdeckt, kann ebenfalls problemlos durch eine entsprechende periphere Beschaltung oder eine entsprechende Intelligenz bei auswertender Schaltung, etwa Mikroprozessor oder Kleinrechner o. dgl. begegnet werden, indem zu Beginn des Einschiebens die Auswerteschaltung so konditioniert ist, daß der zusätzliche Lichtsensor mindestens einmal Licht sehen muß (es ist also keine selektive, ein Infrarot-Negativfenster aufweisende Folie an dieser Stelle vorhanden). Dieses einmalige Empfangen eines Lichtimpulses durch den zusätzlichen IR-Sensor kann als Aktivierung der ganzen Schaltung ausgenutzt werden, so daß dieser ergänzend noch die Funktion eines Aktivierungsmittels übernimmt und entfällt dann natürlich mit der Folge eines Zurückweisens der Karte, wenn der ganze Sensor geschwärzt wäre.

Folgende Überlegungen sollen den Grundgedanken vorliegender Erfindung verdeutlichen: Man könnte es als naheliegend empfinden, auf selektive Wellenlängen, beispielsweise und insbesondere natürlich im Infrarot-Bereich, ansprechende Materialien bei der Transparent- und Opak-Gestaltung der Lesespuren, also Takt- oder Datenspuren auf der Codekarte auszunutzen, so wie dies in den weiter vorn schon genannten Veröffentlichungen US-A-3 919 447 bzw. FR-A-2 192 738 zum Stand der Technik schon beschreben ist. Dies bringt aber nichts, weil auf diese speziellen Wellenlängenbereiche ansprechende Lichtsensoren für die Auswertung der Codierungen in den Takt- und Lesespuren natürlich auch immer dann ansprechen, wenn sie allgemein mit normalem Licht im IR-Bereich bestrahlt werden, da dann mindestens der Sektor ebenfalls in diesem Licht enthalten ist, auf den sie ansprechen. Es ist also wie bei vorliegender Erfindung eine Gegenüberstellung in dem Sinne erforderlich, daß der transparente Bereich der Lesespuren das Auslesen durch bestimmte Leseköpfe gestattet, gleichzeitig aber zusätzliche Lichtsensoren auf Ausgangssignal Null schalten, vorzugsweise auch nur in bestimmten geometrischen Bereichen und Positionen und vorzugsweise ferner abgestimmt auf den Auslesevorgang selbst, was durch die Intelligenz der nachgeordneten Auswerteschaltung problemlos detektiert werden kann.

Die Erfindung macht sich dabei einen Grundsatz zunutze, der darin besteht, daß nicht gleichzeitig ausgelesen und nicht ausgelesen werden kann, jedenfalls im Normalfall nicht, so daß auch keine Möglichkeiten bestehen, die durch die Erfindung gewährleistete Fälschungssicherheit auszuschalten oder zu überlisten. Tatsächlich ermöglicht nämlich die Erfindung durch die Koordinierung des Infrarot-Negativfensters in der Codekarte und des selektiv auf dieses Fenster mit maximaler Empfindlichkeit ansprechenden zusätzlichen Lichtsensors, daß es dennoch gelingt, an der gleichen Stelle, also in den transparenten Bereichen der Lesespuren auszulesen, nämlich mit den normalen IR-Sensoren üblicherweise und gleichzeitig nicht auszulesen, nämlich mit dem zusätzlichen, das schmale Positivfenster für IR-Strahlung aufweisenden Lichtsensor. Die Verknüpfung dieser beiden Ergebnisse gewährleistet den Gut-Zustand der auszulesenden Code-Karte.

Durch die in den Unteransprüchen aufgeführten Maßnahmen sind vorteilhafte Weiterbildungen und Verbesserungen des im Hauptanspruch angegebenen fälschungssicheren optoelektrischen Code-Kartenlesers möglich. Besonders vorteilhaft ist eine einfache Realisierung durch die zusätzliche Anordnung einer die speziellen Eigenschaften des Infrarot-Negativfensters aufweisenden Folie, die im Grunde lediglich zusätzlich bei den das Laminat der Codekarte bildenden verschiedenen Schichten hinzugefügt zu werden braucht, gegebenenfalls und soweit gewünscht, auch nur im Bereich der Lese- und Datenspuren, wobei sich auch der weitere Aufwand geringhalten läßt und lediglich das zusätzliche Anbringen mindestens eines ergänzend auszuwertenden weiteren Lichtsensors umfaßt, der ein spezielles IR-Positivfenster aufweist. Die gegebenenfalls noch gewünschten weiteren Verknüpfungen und Kombinationen mit dem Auslesevorgang und im Bereich der Auswertung der Signale vom zusätzlichen Lichtsensor können dann in der Auswerteschaltung ohne größeren Aufwand niedergelegt werden, da diese in vorteilhafter Ausgestaltung üblicherweise als Mikroprozessor oder Kleinrechner ausgebildet ist und daher die Maßnahmen an dieser Stelle als Software durch entsprechende Programmierung Berücksichtigung finden können.

Zeichnung

Ein Ausführungsbeispiel der Erfindung ist in der Zeichnung dargestellt und wird in der nachfolgenden Beschreibung näher erläutert. Es zeigen:

Fig. 1     die Draufsicht auf einen Code-Kartenleser mit Karteneinsteckschlitz in einer möglichen Ausführungsform;

Fig. 2     eine Draufsicht auf eine für die Durchführung vorliegender Erfindung geeigneten Codekarte mit abgenommener Deckschicht, so daß die sonst nicht sichtbare Verteilung von Takt- und/oder Datenspuren sichtbar ist, mit daneben angeordneten, der Auslesung dienenden Lichtsensoren;

Fig. 3 einen Schnitt durch die Codekarte der Fig. 2 längs der Taktspur und

Fig. 4 in Form eines Diagramms die relative Durchlässigkeit für Infrarotstrahlung einer hier verwendeten zusätzlichen Folie mit Infrarot-Negativfenster sowie das Infrarot-Positivfenster, welches ein zugeordneter, die Eigenschaften dieser Folie auslesender zusätzlicher Lichtsensor aufweist.

Beschreibung der Ausführungsbeispiele

Der Grundgedanke vorliegender Erfindung besteht darin, durch die passende Zuordnung von Infrarot-Negativfenstern zu Code-Karten vorzugsweise im Bereich transparenter Lesespur-Ausschnitte der Codekarte einerseits sowie von Infrarot-Positivfenstern im Bereich mindestens eines zusätzlichen Lichtsensors dafür zu sorgen, daß eine Überprüfung der Karte auf eine Eigenschaft möglich ist, die nicht verfälscht werden kann, ohne daß die Karte zerstört wird, wobei auf entgegengesetzte Fähigkeiten beim Auslesevorgang abgestellt wird, nämlich das gleichzeitige Erkennen und Nichterkennen der transparenten Code-Spurausschnitte.

Bei der nachfolgenden Erläuterung, die speziell auf einen optoelektrischen Code-Kartenleser gerichtet , auf diesen aber nicht beschränkt ist, wird die Kenntnis des grundsätzlichen Aufbaus von optoelektrischen Code-Kartenlesern sowie ergänzende Fähigkeiten, die beim Auslesen mit bewegter Karte erforderlich sind, nämlich das Erkennen von Taktspuren und deren Auswertung dahingehend, daß der Code-Kartenleser selbst stets weiß, wo die Karte sich beim Auslesevorgang befindet bzw. ob diese weiter eingeschoben oder zurückgezogen wird oder Zitterbewegungen ausgeführt werden, als bekannt vorausgesetzt, wobei nochmals verwiesen wird auf die eingangs schon genannten beiden deutschen Patentschriften 27 47 076 und 28 43 462.

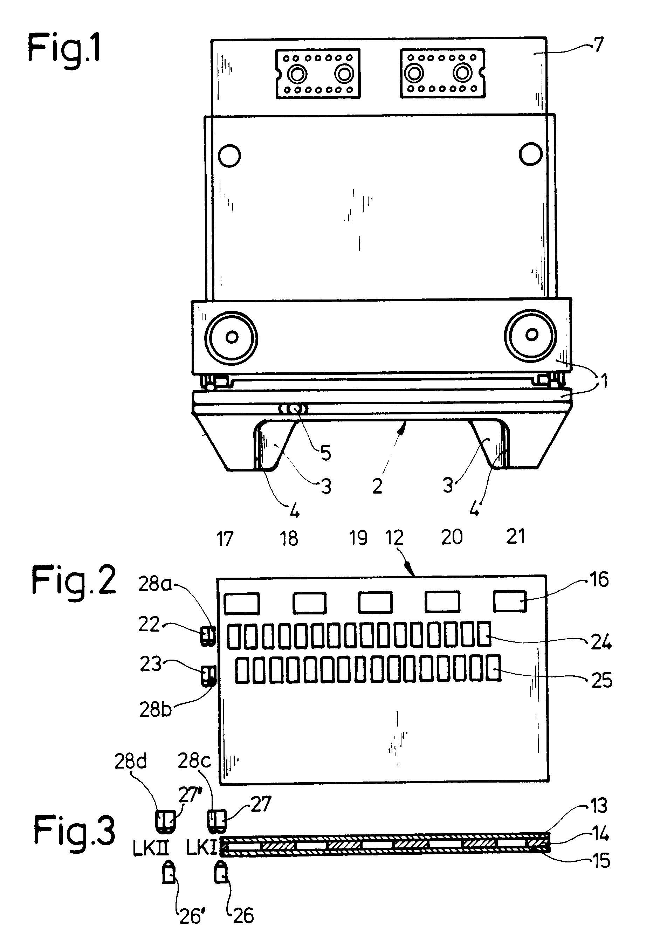

Es braucht daher nur noch kurz auf den grundsätzlichen Aufbau der baulichen Teile eines optoelektrischen Code-Kartenlesers in einer möglichen Ausführungsform eingegan gen zu werden. Entsprechend Fig. 1 umfaßt der Kartenleser einen Frontrahmen 1 mit einem Karteneinsteckschlitz 2 sowie mit frontseitig vorstehenden unteren und seitlichen Führungsflächen 3 und 4; ferner kann eine Fehleranzeigelampe 5 vorgesehen sein, die den Einschub einer unzulässigen oder gefälschten Karte anzeigt, wobei zusätzlich auch ein Einzug der Karte möglich ist.

Innerhalb des Kartenlesergehäuses befinden sich, ausgerichtet auf den Verlauf der Lesespuren auf der jeweils einzuführenden Codekarte, aus Lichtsender und Lichtempfänger bestehende Leseköpfe, die vorzugsweise im Infrarot-Bereich arbeiten, so daß diese im folgenden lediglich noch als IR-Leuchtdiode als Lichtsender sowie als IR-Fototransistor als Lichtempfänger bezeichnet werden.

Die in Fig. 2 gezeigte Codekarte 12 besteht in an sich bekannter Weise aus einem Stapel unlösbar miteinander verbundener Schichten, wobei beispielsweise die obere und die untere Schicht aus ausschließlich infrarotlichtdurchlässigen Materialien bestehen können und eine innere Schicht den eigentlichen Code-Spurträger bildet, der dann aus einem opaken, also lichtundurchlässigen Material besteht und in dem die Code-Markierungen beispielsweise in Form von lichtdurchlässigen, reihenweise angeordneten rechteckförmigen Ausschnitten untergebracht sind. Wie insbesondere in der DE-PS 27 47 076 erläutert, sind die quadratischen Ausschnitte 17, 18, 19, 20 und 21 Taktspurausschnitte, die von hintereinander angeordneten Leseköpfen LKI und LKII (s. Fig. 3) ausgelesen werden, während die beiden restlichen Lesespuren 24 und 25 zwei Datenspuren bilden, die gleichzeitig, also parallel von zwei zugeordneten Leseköpfen 22 und 23 ausgelesen werden. Der Darstellung der Fig. 3 läßt sich entnehmen, daß ein Lesekopf jeweils aus einem optischen Sender, vorzugsweise IR-Leuchtdiode 26 und einem lichtoptischen Empfänger, vorzugsweise IR-Fototransistor 27 besteht.

Ein einfaches erstes Ausführungsbeispiel vorliegender Erfindung kann dann so ausgeführt sein, daß zusätzlich zu den das Laminat der Codekarte bildenden Schichten noch eine weitere Folie hinzugefügt wird, die allgemein transparent ausgebildet sein kann, jedoch im Bereich eines vorgegebenen Wellenlängenabschnitts oder auch nur einer vorgegebenen Wellenlänge und sich dieser mit beliebiger Steilheit annähernd, einen Knick aufweist, so daß das IR-Licht dieser Wellenlänge bzw. um diese Wellenlänge herum und damit in einem vorgegebenen Bereich ausgefiltert wird.

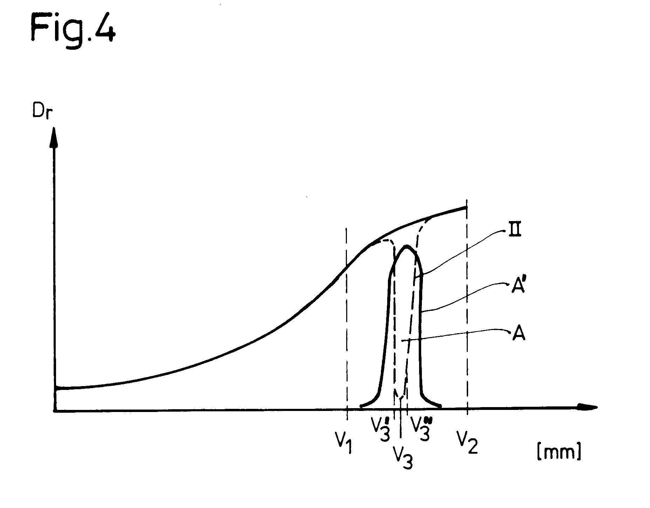

Die Darstellung der Fig. 4 zeigt genauer, was gemeint ist. Normalerweise weist das etwa für die Deckschichten 13 und 15 verwendete Material eine maximale relative IR-Durchlässigkeit Dr zwischen den Wellenlängen $v_1$ und $v_2$ auf. Die zusätzliche Folie weist eine relative Durchlässigkeit Dr mit einer ausgeprägten Einsenkung II auf, die gestrichelt in Fig. 4 ausgebildet ist und die einen Bereich um eine Wellenlänge $v_3$ bildet. Dieses, etwa von der Wellenlänge $v_3'$ bis $v_3''$ reichende IR-Negativfenster, welches mit dem Bezugszeichen A versehen ist, filtert also und vorteilhafterweise möglichst mit steilen Flanken hauptsächlich das IR-Licht aus, dessen Wellenlängen zwischen $v_3'$ und $v_3''$ liegen.

Diese negative Selektivität (Infrarot-Negativfenster A) ist für den normalen Auslesevorgang der Takt- und/oder Datenspuren durch zugeordnete, breitbandig IR-Licht erfassende Fototransistoren 22, 23, 27, 27' mehr oder weniger bedeutungslos, da hinreichend Licht in den transparenten Bereich der Taktspur 16 und der Datenspuren 24, 25 zur Auswertung erfaßt wird.

Durch die weitere Teilmaßnahme vorliegender Erfindung, den normalen Leseköpfen, und zwar, was eigentlich lediglich notwendig ist, den Lichtsensoren, zusätzliche Lichtsensoren zuzuordnen, die in der Darstellung der Figuren 2 und 3 einfach angrenzend an die Auslese-IR-Fototransistoren gezeichnet und mit 28a, 28b, 28c und 28d bezeichnet sind (für das Anstrahlen dieser zusätzlichen IR-Lichtempfänger sind normalerweise keine eigenen Leuchtdioden erforderlich, da das von den Leuchtdioden der ohnehin vorhandenen Leseköpfe erzeugte Licht jedenfalls bei unmittelbarer geometrischer Zuordnung zu den normalen Lesefototransistoren ausreicht), läßt sich nunmehr überprüfen, ob die IR-Lichtstrahlung durch das jeweils in Frage kommende Infrarot-Negativfenster A gefiltert ist oder nicht, also in diesem Längenwellenbereich eine Schwächung erfahren hat. Je nach der Verteilung der Folienbereiche mit dem Infrarot-Negativfenster (ganzflächig wie bei diesem Ausführungsbeispiel oder unter Umständen auch, was weiter unten noch erläutert wird, in vorgegebenen geometrischen Mustern auf der Code-Karte) darf jetzt der mindestens eine zusätzliche IR-Lichtempfänger (also der oder die Fototransistoren 28a, 28b, 28c, 28d) praktisch kein Licht mehr wahrnehmen und daher der zugeordneten Auswerteschaltung das Signal log 0 zuführen. Gleichzeitig führen natürlich die normalen Leseköpfe 22, 23, 27 und 27' bei Durchlaufen der transparenten Ausschnitte der Code-Karte log 1-Signal, wie dies beim Auslesen solcher Karten stets geschieht.

Eine Verknüpfung der Ausgänge der normalen Lese-IR-Lichtempfänger mit den Ausgängen der zusätzlichen IR-Lichtempfänger, die sämtlich in ihren Empfangseigenschaften so ausgebildet sind, daß sie mindestens einen maximalen Pegel ihrer Lichtempfindlichkeit oder Sensibilität dann aufweisen, wenn es sich um IR-Licht in dem Wellenlängenbereich handelt, in welchem die Folie ihr Infrarot-Negativfenster A aufweist, führt daher sofort zu einer Gut-Erkennung der überprüften Code-Karte oder zur Erkennung einer Fälschung. Eine solche Verknüpfung kann im einfachsten Fall mit Hilfe eines UND-Gatters erfolgen, dessem einen Eingang ein invertiertes Signal der zusätzlichen IR-Lichtempfänger mit positivem Infrarot-Fenster A' zugeführt ist, wie die Darstellung der Fig. 4 zeigt.

In diesem Zusammenhang ist es nicht von Bedeutung, daß auch die zusätzlichen Lichtempfänger 28a, 28b, 28c, 28d gegebenenfalls noch Streulicht oder aus der Umgebung ihrer maximalen Empfindlichkeit herrührendes Lichte empfangen;

dies kann durch eine nachgeschaltete Schwellenschaltung problemlos in einfacher Weise weggefiltert werden oder durch sonstige elektrische oder elektronische Schaltungen, die den Empfangsbereich der zusätzlichen Lichtempfänger auf den Bereich des Infrarot-Negativfensters A der Folie im wesentlichen festlegen.

Es ist einzusehen, daß es eine Möglichkeit für eine Fälschung nicht gibt, denn wenn man im Bereich der Lesespuren manipuliert, diese also lichtundurchlässig macht, um den Anforderungen der zusätzlichen Lichtempfänger zu entsprechen, die ja beim Durchlauf der Lesespuren durch die Leseköpfe nichts sehen dürfen, dann sehen auch die normalen Leseköpfe nichts und die Karte kann gar nicht ausgewertet werden.

Diese grundlegende erfinderische Lösung ist einer Vielzahl von Modifikationen zugänglich; so kann man die zusätzlichen Lichtempfänger mit ihrem positiven Infrarot-Fenster A' auch als gleichzeitige Aktivierungssensoren benutzen, indem man den Bereich der transparenten Ausschnitte beispielsweise zu Anfang nicht mit einem Infrarot-Negativfenster versieht, so daß auch die zusätzlichen oder Speziallichtempfänger noch Licht sehen, die Schaltung hierdurch entweder erst aktivieren oder jedenfalls zur Auswertung der Daten freischalten und erst dann die Auswertung weiter gestatten, wenn sie selbst beim weiteren Durchlauf der Datenspuren dann wieder auf Ausgangssignal log 0 gehen.

Eine weitere vorteilhafte Ausgestaltung vorliegender Erfindung liegt darin, daß unter Benutzung des in den beiden genannten deutschen Patenten, insbesondere im deutschen Patent 28 43 462 angegebenen System der Taktspurauswertung dahingehend, daß der Leser stets weiß, bis zu welchem Ausleseschritt die Code-Karte schon eingeschoben worden ist, auf dieses Wissen abgestimmt das Infrarot-Negativfenster A in den transparenten Lesespurbereichen geometrisch verteilt wird, beispielsweise so,

daß bei jedem dritten Taktschritt der zusätzliche Lichtempfänger tatsächlich wieder Licht sieht, dort also keine Filterung durch das Infrarot-Negativfenster A auftritt. Hier können im Grunde auch beliebige Muster, ja sogar Abbildungen oder Zeichnungen durch das abgestimmte Negativ- und Positivfenstersystem ergänzend noch in die Code-Karte eingearbeitet werden, wobei darauf hinzuweisen ist, daß die Fensterbildung nicht notwendigerweise durch das Einlegen einer ergänzenden Folie in das Laminat der Code-Karte erfolgen muß, sondern die infrarot-durchlässigen Schichten selbst eine entsprechende Selektivität für das Infrarot-Negativfenster aufweisen können, selbstverständlich auch in der gewünschten räumlichen oder zeitbezogenen Musterverteilung.

**Patentansprüche**

1. Fälschungssicheres Code-Kartenlesersystem, bestehend aus einem Code-Kartenleser und Hell-Dunkel-Codierungenaufweisenden Code-Karten, insbesondere solchen, die unsichtbare, zwischen zwei ausschließlich Infrarotlicht durchlassenden Deckplatten angeordnete Hell-Dunkel-Codierungen aufweisen, wobei der Code-Kartenleser mindestens einen, vorzugsweise jeweils aus Fotodioden als Lichtquelle und Fototransistor als Lichtempfänger bestehenden Lesekopf, der in einem Kartenführungskanal des Lesers auf die mindestens eine auf einer auszuwertenden Code-Karte angeordneten Lesespur, die aus Taktspur und/oder Datenspur besteht, ausgerichtet ist, und ferner Versorgungs- und Auswerteschaltungen für den mindestens einen Lesekopf aufweist, dadurch gekennzeichnet, daß in dem Code-Kartenleser mindestens ein zusätzlicher Lichtempfänger (Fototransistor 28a, 28b, 28c, 28d) vorgesehen und so ausgebildet ist, daß er lediglich auf Licht einer vorgegebenen Wellenlänge oder innerhalb eines vorgegebenen Wellenlängenbereichs, der ein positives optisches Fenster darstellt, anspricht und daß die Code-Karten (12) im Lesebereich dieses zusätzlichen Lichtempfängers Mittel aufweisen, die ausschließlich in dem Wellenlängenbereich, in dem der Lichtempfänger sein positives optisches Fenster hat, auf die Code-Karte auffallendes Licht selektiv ausfiltern, die ein negatives optisches Fenster realisieren.

2. Fälschungssicheres Code-Kartenlesersystem nach Anspruch 1, dadurch gekennzeichnet, daß das von den Lichtempfängern (22, 23, 27, 27') des mindestens einen Lesekopfes empfangene Licht Infrarotlicht ist und daß auch das positive optische Lichtfenster des mindestens einen zusätzlichen Lichtempfängers sowie das negative Fenster der Filtermittel der Code-Karte im Infrarot-Bereich liegen.

3. Fälschungssicheres Code-Kartenlesersystem nach Anspruch 1 oder 2, dadurch gekennzeichnet, daß die selektiven Lichtfiltermittel zur Bildung eines Infrarot-Negativfensters (A) in vorgegebenen Bereichen der Code-Karte (12) dort angeordnet sind, wo sich die Lesespuren (Taktspuren, Datenspuren) befinden.

4. Fälschungssicheres Code-Kartenlesersystem nach Anspruch 2, dadurch gekennzeichnet, daß die für IR-Licht durchlässigen Lesespurausschnitte von Taktspuren und/oder Datenspuren sämtlich oder nur zum Teil gleichzeitig die selektiven Lichtfiltermittel zur Bildung des Infrarot-Negativfensgters (A) aufweisen und daß der mindestens eine zusätzliche Lichtempfänger (28a-28d) angrenzend oder jedenfalls so im Bereich der Normalleseköpfe angeordnet ist, daß die IR-durchlässigen Datenspur- und/ oder Taktspurbereiche, die gleichzeitig ein Infrarot-Negativfenster (A) aufweisen, von ihm ausgelesen werden können.

5. Fälschungssicheres Code-Kartenlesersystem nach einem der Ansprüche 1-4, dadurch gekennzeichnet, daß mehrere zusätzliche IR-Lichtempfänger (28a-28d) vorgesehen und so angeordnet sind, daß sie beim Durchlauf der Code-Karte durch den Leser mindestens zeitweise auf das Infrarot-Negativfenster aufweisende transparente Bereiche der Code-Karte treffen.

6. Fälschungssicheres Code-Kartenlesersystem nach einem der Ansprüche 1-5, dadurch gekennzeichnet, daß der mindestens eine zusätzliche IR-Lichtempfänger mindestens zu Beginn des Lesevorgangs mit im Wellenlängenbereich seines positiven Empfindlichkeitsfensters (A') liegenden IR-Licht beaufschlagt ist und als Aktivierungsmittel für das Auslesen der Karte, für das Auswerten der Takt- und Datenspuren u. dgl. eingesetzt ist, bevor Infrarot-Negativfensterbereiche mit ihm in Wirkverbindung treten.

7. Fälschungssicheres Code-Kartenlesersystem nach einem der Ansprüche 1-6, dadurch gekennzeichnet, daß die Verteilung der Infrarot-Negativfenster mit Filterung von IR-Licht innerhalb eines vorgegebenen Wellenlängenbereichs in den transparenten Teilen der Code-Karte einem vorgegebenen geometrischen Muster folgend verteilt sind.

8. Fälschungssicheres Code-Kartenlesersystem nach einem der Ansprüche 1-7, dadurch gekennzeichnet, daß bei über einen Taktspurverlauf über die jeweilige Position der auszulesenden Karte informierten Lesern vorgegebene transparente Bereiche von Taktspur und/oder Datenspur und/oder sonstigen IR-lichtdurchlässigen Teilen der Code-Karte unter Verzicht auf die selektiven Filtermittel auch IR-Licht durchlassen, welches mit seiner Wellenlänge innerhalb des positiven Empfangsfensters des mindestens einen zusätzlichen Lichtempfängers liegt.

9. Fälschungssicheres Code-Kartenlesersystem nach Anspruch 8, dadurch gekennzeichnet, daß die Verteilung der transparenten Bereiche auf der Code-Karte ohne Infrarot-Negativfenster einem vorgegebenen Muster folgt, welches im Bereich der Auswerteschaltungen für die Ausgangssignale des mindestens einen zusätzlichen Lichtempfängers in Abstimmung auf das Positionserkennungssystem über die Taktspurverteilung gespeichert ist.

10. Fälschungssicheres Code-Kartenlesersystem nach Anspruch 1, dadurch gekennzeichnet, daß die selektiven Lichtfiltermittel, die das Negativfenster bilden, dort auf der Code-Karte (Magnetkarte, Kreditkarte) angeordnet sind, wo sich eine transparente, von anderen nichtselektiven optischen Lichterfassungsmitteln auswertbare Stelle befindet.

**Claims**

1. Fraud-proof code card reader system, comprising a code card reader and code cards having light and dark codes, in particular code cards having invisible light and dark codes arranged between two masking plates which allow through only infrared light, the code card reader having at least one read head, preferably in each case comprising photodiodes as a light source and a phototransistor as a light receiver, and being aligned in a card guide channel of the reader on the at least one read track which is arranged on a code card to be evaluated and which comprises a clocking track and/or data track, and furthermore supply and evaluation circuits for the at least one read head, characterized in that there is provided in the code card reader at least one additional light receiver (phototransistor 28a, 28b, 28c, 28d) which is constructed such that it responds only to light of a predetermined wavelength or within a predetermined wavelength range representing a positive optical window, and in that, in the read range of this additional light receiver, the code cards (12) have means which, exclusively in the lightwave range in which the light receiver has its positive optical window, selectively filter out light falling on the code card and produce a negative optical window.

2. Fraud-proof code card reader system according to Claim 1, characterized in that the light received by the light receivers (22, 23, 27, 27') of the at least one read head is infrared light, and in that the positive optical light window of the at least one additional light receiver and the negative window of the filter means of the code card also lie in the infrared range.

3. Fraud-proof code card reader system according to Claim 1 or 2, characterized in that the selective light filter means are arranged to form an infrared negative window (A) in predetermined regions of the code card (12) where the read tracks (clocking tracks, data tracks) are located.

4. Fraud-proof code card reader system according to Claim 2, characterized in that the read track sections of clocking tracks and/or data tracks which allow through IR light all have or only some have at the same time the selective light filter means for forming the infrared negative window (A), and in that the at least one additional light receiver (28a-28d) is arranged adjacent to or at any rate in the region of the normal read heads such that the data track and/or clocking track regions which allow through IR and which at the same time have an infrared negative window (A) can be read out from the at least one additional light receiver.

5. Fraud-proof code card reader system according to one of Claims 1-4, characterized in that a plurality of additional IR light receivers (28a-28d) are provided and are arranged such that as the code card passes through the reader they at least temporarily meet transparent regions of the code card having the infrared negative window.

6. Fraud-proof code card reader system according to one of Claims 1-5, characterized in that the at least one additional IR light receiver is acted upon at least at the start of the reading procedure by IR light within the wavelength range of its positive sensitivity window (A') and is used as the activation means for reading out the card, for evaluating the clocking and data tracks and the like, before infrared negative window regions enter into active connection with it.

7. Fraud-proof code card reader system according to one of Claims 1-6, characterized in that the distribution of the infrared negative windows with filtering of IR light within a predetermined wavelength range is distributed in the transparent parts of the code card in accordance with a predetermined geometric pattern.

8. Fraud-proof code card reader system according to one of Claims 1-7, characterized in that, in the case of readers which have been informed via a clocking track profile about the respective position of the card to be read out, predetermined transparent regions of the clocking track and/or data track and/or other parts of the code card which allow through IR light also allow through IR light of which the wavelength is within the positive reception window of the at least one additional light receiver, without the inclusion of the selective filter means.

9. Fraud-proof code card reader system according to Claim 8, characterized in that the distribution of the transparent regions on the code card without an infrared negative window follows a predetermined pattern which, in the region of the evaluation circuits for the output signals of the at least one additional light receiver, is stored to match the position recognition system by way of the clocking track distribution.

10. Fraud-proof code card reader system according to Claim 1, characterized in that the selective light filter means which form the negative window are arranged on the code card (magnetic card, credit card) where there is a transparent place which can be evaluated by other non-selective optical light detection means.

**Revendications**

1. Système pour lecteur de carte à code infalsifiable, consistant en un lecteur de carte à code en particulier un lecteur qui présente des codifications claires-sombres invisibles, disposées entre deux plaques de recouvrement laissant exclusivement passer de la lumière infrarouge, dans lequel le lecteur de carte à code présente au moins une tête de lecture consistant de préférence respectivement en photodiodes comme source de lumière et phototransistor comme récepteur de lumière, tête qui est orientée dans un canal de guidage de la carte du lecteur sur au moins une piste de lecture disposée sur une carte à code à exploiter, poste qui consiste en une piste horloge et/ou une piste de données et présente en outre des circuits d'alimentation et d'exploitation pour au moins l'une des têtes de lecture, système caractérisé en ce que dans le lecteur de carte à code, il est prévu au moins un récepteur de lumière additionnel (phototransistor 28a, 28b, 28c, 28d) et celui-ci est constitué de telle façon qu'il s'active uniquement sur la lumière d'une longueur d'onde prédéterminée ou à l'intérieur d'une zone prédéfinie de longueur d'onde qui constitue une fenêtre optique positive et que les cartes à code (12) présentent dans la zone de lecture de ce récepteur de lumière additionnel des moyens qui filtrent et éliminent sélectivement exclusivement dans la zone de longueur d'onde dans laquelle le récepteur de lumière a sa fenêtre optique positive, la lumière tombant sur la carte à code, moyens qui constituent une fenêtre optique négative.

2. Système pour lecteur de carte à code infalsifiable selon la revendication 1, caractérisé en ce que la lumière reçue par les récepteurs de lumière (22, 23, 27, 27') d'au moins une tête de lecture est de la lumière infrarouge et en ce qu'aussi la fenêtre de lumière optique positive d'au moins un récepteur de lumière additionnel ainsi que la fenêtre négative du moyen de filtrage de la carte à code se trouve dans la zone infrarouge.

3. Système pour lecteur de carte à code infalsifiable selon la revendication 1 ou 2, caractérisé en ce que les moyens sélectifs de filtration de la lumière sont disposés à l'endroit où les pistes de lecture (pistes horloge, pistes de données) se trouvent pour la formation d'une fenêtre négative à infrarouge (A) dans les zones prédéfinies de la carte à code (12).

4. Système pour lecteur de carte à code infalsifiable selon la revendication 2, caractérisé en ce que les sections des pistes horloge et/ou des pistes de données de lecture transparentes à la lumière infrarouge présentent toutes ensemble ou seulement pour partie simultanément les moyens sélectifs de filtration de la lumière pour la formation de la fenêtre négative (A) à infrarouge et en ce que l'un au moins des récepteurs de lumière additionnels (28a, 28d) est disposé de façon adjacente ou en tout cas dans la zone des têtes de lecture normales de telle façon que les zones des pistes de données et/ou des pistes horloge laissant passer la lumière infrarouge, qui présentent en même temps une fenêtre négative infrarouge (A), puissent être sélectionnées par lui.

5. Système pour lecteur de carte à code infalsifiable selon l'une des revendications 1 à 4, caractérisé en ce que plusieurs récepteurs de lumière additionnels à infrarouge (28a, 28d) sont prévus et sont disposés de telle façon qu'ils atteignent lors du balayage de la carte à code par le lecteur les zones transparentes de la carte à code présentant la fenêtre négative à infrarouge au moins temporairement.

6. Système pour lecteur de carte à code infalsifiable selon l'une des revendications 1 à 5, caractérisé en ce que l'un au moins des récepteurs de lumière à infrarouge additionnel au moins au début du processus de lecture est activé par de la lumière infrarouge se trouvant dans la zone de longueur d'onde de sa fenêtre de sensibilité positive (A') et est inséré comme moyen d'activation pour la lecture de la carte, pour l'exploitation des pistes horloge et des pistes de données et analogues, avant que les zones des fenêtres négatives à infrarouge n entrent en liaison opérationnelle avec lui.

7. Système pour lecteur de carte à code infalsifiable selon l'une des revendications 1 à 6, caractérisé en ce que la répartition des fenêtres négatives à infrarouge avec filtrage de la lumière infrarouge à l'intérieur d'une zone de longueur d'onde prédéfinie dans les parties transparentes de la carte à code a lieu selon un modèle géométrique prédéfini.

8. Système pour lecteur de carte à code infalsifiable selon l'une des revendications 1 - 7, caractérisé en ce que dans le cas de lecteurs informés par un balayage de piste horloge sur la position respective de la carte à lire, des zones transparentes prédéfinies de piste horloge et/ou de pistes de données et/ou d'autres parties de la carte à code laissent passer de la lumière infrarouge en renonçant aux moyens de filtrage sélectif aussi de la lumière infrarouge, qui se trouve par sa longueur d'onde à l'intérieur de la fenêtre positive de réception d'au moins un récepteur de lumière additionnel.

9. Système pour lecteur de carte à code infalsifiable selon la revendication 8, caractérisé en ce que la répartition des zones transparentes sur la carte à code sans fenêtre négative à infrarouge, correspond à un modèle prédéfini, qui est mis en mémoire dans la zone des circuits d'exploitation pour les signaux de sortie d'au moins un récepteur de lumière additionnel en accord avec le système de détection de position sur la répartition des pistes horloge.

10. Système pour lecteur de carte à code infalsifiable selon la revendication 1, caractérisé en ce que les moyens sélectifs de filtrage de la lumière, qui constituent la fenêtre négative sont disposés sur la carte à code (carte magnétique, carte de crédit, à l'endroit où se trouve une place transparente exploitable par d'autres moyens de détection de lumière optiques non sélectifs.

Fig.1

7

1

5

3    2    3

4    4

17    18    19    12    20    21

Fig.2    28a    16

22    24

23    25

28b

28d    28c

27'    27    13

Fig.3    14

LKII    LKI    15

26'    26

# Fig.4